## Europäisches Patentamt

## European Patent Office

## Office européen des brevets

(11) Publication number: **0 056 135**
**A2**

# EUROPEAN PATENT APPLICATION

(21) Application number: 81110554.3

(22) Date of filing: 17.12.81

(51) Int. Cl.³: **G 01 F 1/66**

(30) Priority: 13.01.81 US 224725

(43) Date of publication of application: 21.07.82
Bulletin 82/29

(84) Designated Contracting States: DE FR GB

(71) Applicant: THE PERKIN-ELMER CORPORATION, Main Avenue, Norwalk Connecticut 06856 (US)

(72) Inventor: Loveland, Robert S., 812 Coral Tree Drive, West Covina California 91791 (US)

(74) Representative: Patentanwälte Grünecker, Dr.Kinkeldey Dr.Stockmair, Dr.Schumann,Jakob, Dr.Bezold Meister, Hilgers, Dr.Meyer-Plath, Maximilianstrasse 43, D-8000 München 22 (DE)

(54) Flowmeter system with improved dynamic range.

(57) A flowmeter system having means defining a path for confining the flow of a fluid medium therethrough, first and second transducers disposed along said flow path for generating and receiving acoustic compression waves in the fluid medium between the transducers, a phase lock loop transmitter/receiver system including a voltage controlled oscillator for adjusting the frequency of the acoustic compression waves to maintain the compression wave length constant, means for measuring the phase difference of the received acoustic compression waves relative to that transmitted and means for producing a sum signal proportional to the sum of the two measured phase differences to vary the output of said voltage controlled oscillator, and means for producing a difference signal proportional to the difference of the two measured phase differences which provides an output signal representing the direction and magnitude of the measured flow, said means for measuring the phase sum and difference comprising a phase detector of the edge triggered type comprising a set/reset flipflop which is physically separated from the voltage controlled oscillator. The system also includes means for generating signals representing changes in velocity of sound in the fluid medium.

# FLOWMETER SYSTEM WITH IMPROVED DYNAMIC RANGE

## RELATED APPLICATIONS

U.S. Application for Patent entitled "Flowmeter System with a Synchronous Clock for Generation of Timing Signals" by R.S. Loveland, filed even date herewith, Attorney Docket AS-2782;

U.S. Application for Patent entitled "Flowmeter System with Ultrasonic Energy Improvement in Equilibration" by R.S. Loveland, filed even date herewith, Attorney Docket AS-2783;

U.S. Application for Patent entitled "Flowmeter System With Improved Loop Gain" by R.S. Loveland, filed even date herewith, Attorney Docket AS-2785; and

U.S. Application for Patent entitled "Flowmeter System with Digital Phase Shifter and Calibration" by R.S. Loveland, filed even date herewith, Attorney Docket AS-2786.

## BACKGROUND OF THE INVENTION

This invention relates to acoustical flowmeter systems and is particularly directed to an improvement in the acoustical flowmeters of the type described and claimed in the U.S. Patent No. 4,003,252 entitled "Acoustical Wave Flowmeter" by E.J. DeWath which issued Jan 18, 1977 and the flowmeter system of the type described and claimed in the U.S. Patent No. 4,164,865 entitled "Acoustical Wave Flowmeter" by L.G. Hall and R.S. Loveland which issued August 21, 1979.

The invention of DeWath was directed to a flow meter having an unobstructed tubular wall thereby eliminating all impediments to the flow path of the fluid and eliminating all cavities in which debris might collect. The advantages of such a configuration is fully set forth in the DeWath Patent. To measure flow of a selected fluid in the DeWath flowmeter, however, required a calibration for that particular fluid and required a recalibration if the flow of a different fluid was to be measured since the flowmeter was not responsive to changes in fluid species or densities.

The Hall and Loveland invention improved the DeWath flowmeter by providing a flowmeter that measured flow accurately regardless of changes in fluid composition or temperature and by providing a flowmeter with a means for determining a change in velocity of sound of the fluid being measured.

In order to accomplish this, the Hall and Loveland acoustical wave flowmeter system had two spaced apart crystal transducers in the wall of the flowmeter conduit (sometimes called a cavity) to produce ultrasonic acoustic compressions at selected frequencies in the fluid within the cavity. The transducers were alternately switched into a transmit and a receive mode to generate upstream and downstream transmitted and received signals with an automatic means to adjust the transmitted frequencies to compensate for changes ir velocity of the acoustic compressions in the fluid caused by changes in fluid composition and temperature. The electronic circuitry involved in the Hall and Loveland flowmeter system include means for measuring and storing signals representing the phase difference between the transmitting transducer signal producing the acoustic compressions and the signal produced by the receiving transducer during each of two successive transmit/receive cycles. Circuit means were provided to determine the difference between the signals representing the two successive phase differences wherein the sign of the difference corresponds to the direction of the fluid flow and the magnitude of the difference corresponds to the rate of fluid flow through the flowmeter. Circuit means were also provided to add the two successive phase difference signals together to obtain a signal proportional to the velocity of sound in the fluid moving through the flowmeter. This latter signal indicated the change in composition of the fluid flowing through the meter.

The Hall and Loveland flowmeter system had a phase lock loop in the receiver/transmitter system which included a phase detector contained in an integrated

0056135

circuit CDC 4046 (phase lock loop) voltage control oscillator (VCO). This phase detector functions as an exclusive OR circuit and is presently typical of the phase detectors used in the industry. It was found, however, that this detector was not adequate for two basic reasons--coupling between the VCO and the detector and range, or capacity, to operate over larger phase changes.

Coupling between the VCO and the phase detector caused small errors in the output signal and it was thought that by separating the two circuits, the operation of the system would be improved. However, it was found that this separation alone did not sufficiently improve the system to be acceptable. It did, however, solve the coupling problem. Range, however, was the real probem with the prior art phase detector since it did not have the capacity to function under certain conditions and thus severely limited the usefulness of the flowmeter.

When the patented flowmeter was subjected to abrupt changes in fluid species (changes in densities) or abrupt changes in peak flow, where the system became over ranged, the system would go to an out-of-lock mode, an inoperable mode. It is understood that being a phase lock loop system, it is either in-lock or out-of-lock, and when the system went out-of-lock, the operator must turn the system off and then back on again to try and reacquire a signal, that is, to relock the system into an operative mode. It is obviously desirable, therefore, that the phase detector range be increased to prevent this out-of-lock problem and so that the flowmeter system can then measure larger changes in fluid constituencies and peak flows.

Accordingly, it is an object of this invention to provide a flowmeter system of the type which measures fluid flow and changes in fluid densities with an increased range so that larger changes in gas densities and flows can be measured.

SUMMARY OF THE INVENTION

-3-

The flowmeter system which meets the foregoing object comprises means defining a path for confining the flow of a fluid medium therethrough, first and second transducers disposed along said flow path for generating acoustic compression waves in the fluid medium between the transducers, circuit means for automatically adjusting the frequency of the acoustic compression waves to maintain the compression wave length constant in the fluid medium, means for measuring the phase difference of the acoustic compression waves transmitted upstream relative to that received and downstream relative to that received and for producing a sum signal dependent upon the sum of the two measured phase differences and transmitting said signal to said means for automatically adjusting the frequency of the acoustic compression waves, and means for producing a difference signal proportional to the difference of the two measured phase differences which provides an output signal representing the direction and magnitude of the measured flow, said means for measuring the phase difference comprising a phase detector of the edge triggered type, a set/reset flipflop formed of NAND gates. The phase detector is physically separated from the means for actually adjusting the frequency of the acoustic wave and the circuit also includes means for generating signals representing the direction and magnitude of the flow of the fluid medium as well as changes in composition of the fluid medium.

As will be apparent from the more detailed description hereinafter, the flowmeter system has been improved by increasing its capability of handling twice the amount of fluid flow as in the prior art patented system. It will also be apparent that this phase lock loop flowmeter system but is also useful in increasing the dynamic range of any phase lock loop system.

BRIEF DESCRIPTION OF THE DRAWINGS

Figure 1 is a simplified block diagram of the flowmeter system of the invention,

Figure 2 is the prior art exclusive OR type phase detector,

-4-

Figure 3 is the truth table for the OR gate of Figure 2,

Figure 4 illustrates the timing pulses for the OR gate of Figure 2,

Figure 5 illustrates the circuit of the phase detector of the present invention, and

Figure 6 illustrates the timing pulses of the phase detector of Figure 5.

DETAILED DESCRIPTION

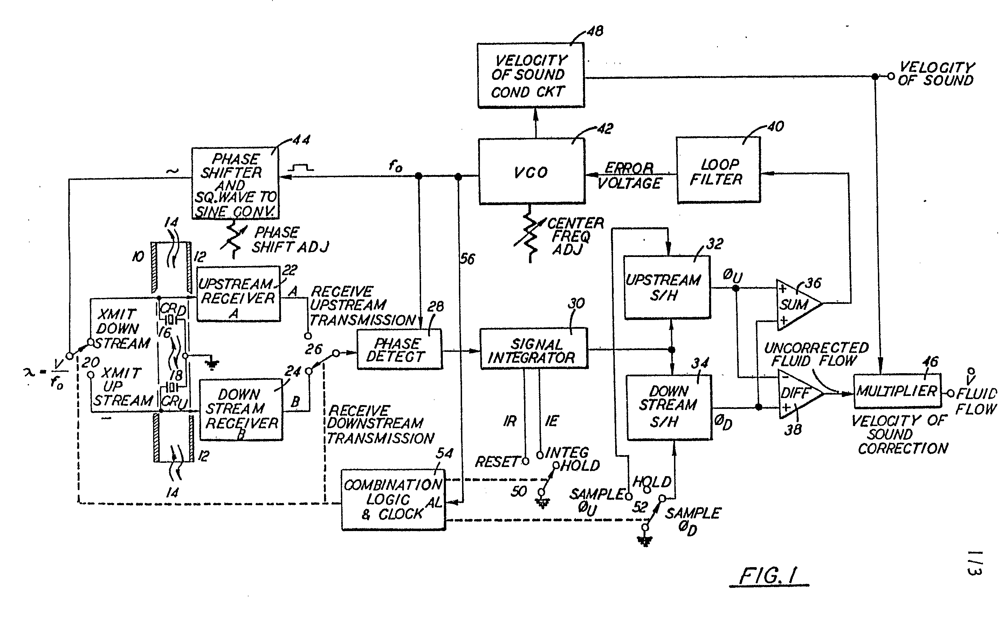

Figure 1 illustrates the flowmeter system of the present invention which includes a transducer assembly 10, shown in longitudinal section, which comprises a substantially cylindrical body having a central cylindrical opening, or bore 12, through which a fluid medium flows in both directions, as indicated by the arrows 14.

The transducer assembly is made generally in accordance with the description in the U.S. Patent to DeWath, supra, and is provided with spaced apart cylindrical crystal transducers whose inner diameters are substantially coextensive with the cylindrical bore 12 so that the wall is substantially uniform with no obstructions or cavities to provide a place for particulate matter to collect or to provide an impediment for the flow of fluid therethrough. The purpose of the transducers is described in the DeWath patent and in the Hall and Loveland patent, supra.

While the Hall and Loveland patent also showed and described, in great detail, control circuitry for operating the crystal transducers to accomplish the desired results, for the purpose of this invention, this circuitry has been simplified into block diagrams and reference can be made to this patent if more detailed information on the operation of the circuit is thought necessary.

. As can be seen in Figure 1, the two ultrasonic crystal transducers, represented by crystals 16 and 18, also identified as $CR_D$ and $CR_U$, are alternately each connected to the transmission control circuitry via a switching mechanism 20. When one transducer is connected to the transmission circuitry via switching mechanism 20, the other transducer is in the receive mode the output of which in turn is connected via a second switching mechanism 26 to a phase detector 28, a signal integrator 30 and two sample-and-hold circuits 32 and 34, identified as upstream and downstream. The outputs of these two sample-and-hold circuits are connected to two operational amplifiers, one identified as a summing amplifier 36 and the other identified as a difference amplifier 38. The output of the summing amplifier 36 will indicate the velocity of sound and the output of the difference amplifier will indicate the magnitude and direction of the measured fluid flow. The output of the summing amplifier is connected to a loop filter 40 and to a voltage controlled oscillator 42 (VCO) which is connected back to the phase detector 28 and to a phase shifter and square-wave-to-sine wave converter 44. The phase shifter and converter 44 output is connected back to the first switching mechanism 20. Also like the summing amplifier, the output of the difference amplifier 38 is connected to the VCO 42 but through a multiplier 46 and a velocity of sound conditioning circuit 48. One output of the multiplier is the magnitude and direction of the fluid flow as stated above and the second output represents the relative velocity of sound. Shown connected by dotted lines are the first and second switching mechanisms 20 and 26 and two additional switching mechanisms 50 and 52 all under the control of a combinational logic and clock circuit 54. The circuit 54 alternates transmit and receive functions of the two crystal transducers 16 and 18, alternates the output of the upstream and downstream receivers 22 and 24, operates the integrator 30 between reset, integrate and hold functions and, finally, operates the upstream and downstream sample-and-hold circuits 32 and 34 through a sample, hold, and sample function.

As shown in this Figure, the ultrasonic crystals 16 and 18 are alternately switched into either the transmit or receive mode by the combinational logic circuit. Thus, while one crystal is receiving, the other crystal is transmitting.

For each transmit/receive cycle, the phase difference between the transmit signal and the received signal is detected by the phase detector 28. The average value is determined for each transmit/receive cycle by the integrator circuit 30 which goes through an integrate, hold and reset mode for each transmit/receive cycle. During each integrator hold period, the respective sample/hold circuit for the upstream phase and the downstream phase is ready to accept the new signal (sample mode) as data is available at the integrator output. The upstream and downstream sample/hold circuits are updated with new data at the end of each respective transmit/receive cycle and stores (holds) the information during the wait period.

In the differential amplifier 38, the stored values are then subtracted with the output indicating the direction and magnitude of the fluid flow. In addition, the same stored values are added together in the summing amplifier to determine if a common mode change has occurred in the fluid medium. A common mode change is caused by a change in the velocity of the ultrasound which, in turn, may be due to either temperature or fluid species change. The result is that the sum of the upstream and downstream data, held by the respective sample-and-hold circuits, changes in a manner which causes an error voltage signal at the voltage controlled oscillator (VCO) 42 input to change the transmit frequency in a direction which returns the wave length of the ultra-sound frequency to its original value thereby keeping the wave length constant.

The components of the control circuitry thus far described correspond to the control circuitry of the flowmeter system of the Hall and Loveland patent; it being understood that the foregoing is a simplification of the patented control circuitry. For example, the switching mechanism 20 in this disclosure is actually a combination of high speed transistorized switches comprised of transistors Q1 thru Q8 controlled from the clock source by pulses X,Y, Q3 and $\overline{Q3}$ applied to their respective inputs, switching mechanism 26 are transistors Q9 and Q10 with pulses A & B applied to their respective inputs , etc. Other switching mechanisms exist in the circuitry of the patent through the operation of the clock source but otherwise the block diagrams correspond to the patented circuitry. It is understood that the other switching mechanisms were shown here to illustrate the operation of the circuitry in the block diagram only.

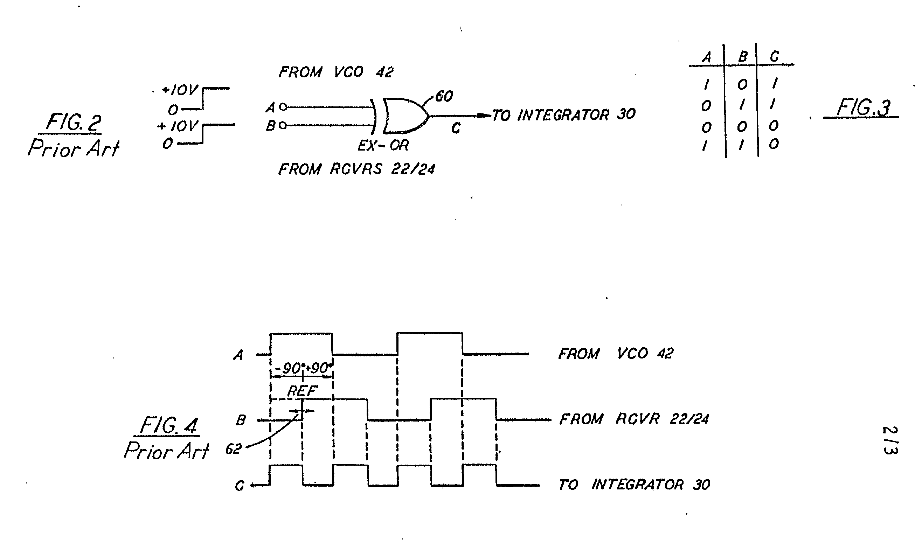

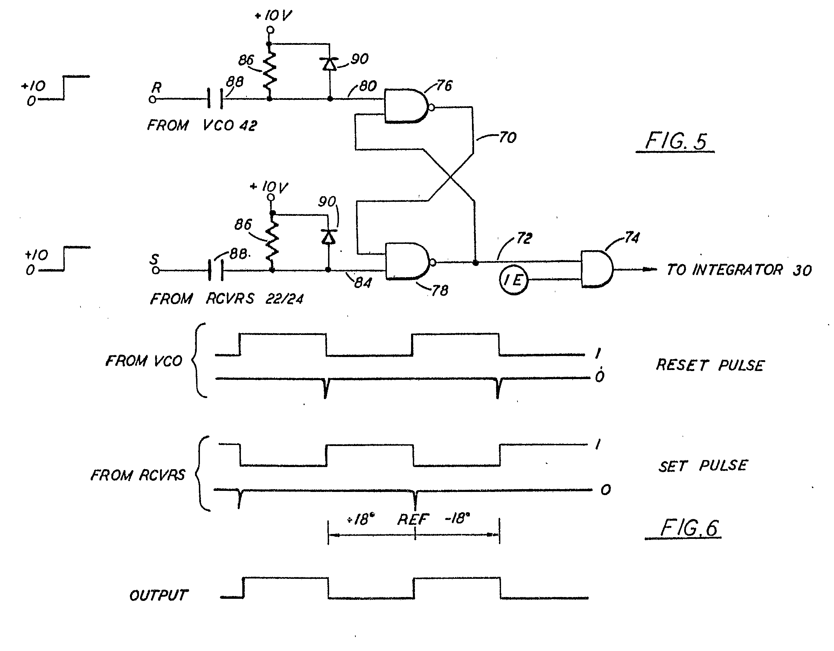

As herein above stated, this invention improves the patented system by increasing its dynamic range and this is accomplished by incorporating a new and improved phase detector into the flowmeter system. However, in order to understand the significant improvement in phase detection, a review of the prior art phase detector as used in the patented system will first be described. In connection with this, attention is now directed to Figure 2,3, and 4 which represent the prior art and where Figure 2 is the conventional symbol 60 of an exclusive OR gate, Figure 3 illustrates the truth table for the exclusive OR gate and Figure 4 illustrates the timing pulses applied to the two inputs A and B and the output C from the OR gate.

In Figure 4, input pulses applied to input A originate from the voltage controlled oscillator 42 and represent the transmit frequencies generating the acoustic compression waves in the fluid medium and the input pulses applied to the input B are received either from the upstream or downstream receiver 22 or 24 , as the case may be. The output C can be seen to be twice the frequency of the input frequencies and, under calibrated, no flow conditions, each pulse is of equal length throughout the pulse train. Considering the wave from the voltage controlled oscillator 42, line A, as being stationary, then the received wave form, line B, is 90° out of phase with the wave form of line A when the system is in locked loop. Thus, as the flow is being measured by the flowmeter, the received signal will be allowed to go plus and minus 90°. However, if the wave form from the receiver is allowed to go in excess of plus or minus 90°, the phase detector is out of range and will not respond since its maximum range is plus or minus 90°.

-8-

This is represented by arrow 62 in Figure 4.

Again, this is a typical phase detector used in typical phase lock loop systems.

Turning now to the phase detector 70 comprising this invention, attention is directed to Figures 5 and 6 where Figure 5 is the circuit for the phase detector and Figure 6 illustrates the timing pulses to and from the phase detector.

The phase detector 70 of this invention utilizes the input pulses from the VCO 42 and from the receivers 22 and 24 as described in connection with the prior art phase detector and the output thereof is sent to the integrator 42. The output 72 from the phase detector is coupled to an AND gate 74 to which is connected the integrate enable pulse IE, as in the prior art. The phase detector comprises a pair of NAND gates, 76 and 78 with circuits cross coupled, output to input to form a set/reset flipflop. The input 80 and 84 of the NAND gates receive signals from the VCO and from the receivers, respectively, also include a differentiating circuit comprised of resistor 88 and capacitor 86, the outputs of which are coupled directly to the inputs 80 and 82 and with a protection diode 90 connected to the positive supply. With this arrangement the falling edges of the input wave forms are differentiated to form a very narrow pulse which are used to trigger the set, reset flipflop. This is shown in pulse trains identified as the reset pulse and the set pulse Thus, every time the set input receives a logic zero input, the output of the flipflop will set and go to a logic one and everytime there is a logic zero input from the VCO the output of the flip flop will go to a logic zero. Thus, if the reset pulse is held fixed and the output from the receivers allowed to change in phase (which represents the flow or velocity of sound change in the flowmeter), the phase of the received signal can thus be allowed to change by as much as plus or minus $180^\circ$. Thus, the output duty cycles of the wave form will change according to the received signal and, since the set and reset pulses can vary as much as plus and minus $180^\circ$, the system is capable of accepting twice the flow range and twice the velocity of sound change due to gas composition change as compared to the prior art system and this greatly increases the usefulness and applications of the flowmeter system.

It should be apparent from the foregoing that this invention may be incorporated into the circuitry of the Hall and Loveland patent, supra, to improve its performance, or may be incorporated in circuitry improved by the incorporation of any one or all of the inventions identified under RELATED APPLICATIONS, supra, into a circuit to improve the performance of such circuitry. If the invention of the Application AS 2782 is not used, of course, line 56, shown herein, would be omitted.

What is claimed is:

1.  A flowmeter system for measuring a fluid along a path comprising in combination:

means defining a path for confining a fluid flow;

a first and second transducer disposed along said path;

a transducer control circuit coupled to said first and said second transducers to cause said first transducer to produce first acoustic compressions in the fluid in response to first transmit signals applied to said first transducer and said second transducer to produce a first received signal when said first acoustic compressions are sensed thereby during a first transmit-receive cycle and to cause said second transducer to produce second acoustic compressions in the fluid in response to signals applied to said second transducer and said first transducer to produce a second received signal when said second acoustic compressions are sensed thereby comprising a second transmit-receive cycle ;

said control circuit including:

means to switch from said first to said second transmit-receive cycle:
difference between the first acoustic compression produced at said first transducer and said first received signal produced by said second transducer during each said first transmit-received cycle;

second measurement means to measure a second phase difference comprising the phase difference between the second acoustic compression produced at said second transducer and said second received signal produced by said first transducer during each said second transmit-received cycle;

difference means responsive to said first and said second measurement means to produce a difference signal whose magnitude equals the difference between one said first phase difference and one said second phase difference wherein the magnitude of said difference signal is directly related to the instantaneous fluid flow rate and the algebraic sign of said difference signal represents the direction of fluid flow along the path; and

means to automatically adjust the frequency of the acoustic compressions produced by each said transducer to a frequency where a fixed wavelength distance, in the fluid flow medium, occurs across the distance of either said transducer, thereby maintaining operation at the acoustic resonance to maximize the magnitude of the received signal produced at the other transducer so that said difference signal output of the meter is insensitive to the velocity of sound in the fluid;

said first and second measurement means comprising means for differentiating said first and second transmit signals, means for differentiating said first and second received signals, the product of said differentiating being signals used to determine said phase difference.

2. The flowmeter system is claimed in claim I including a set/reset flip-flop and wherein said differentiated signals are all applied to said flip-flop with the output of said flip-flop being connected to signal integrator and to said difference means.

3. The flowmeter as claimed in claim 2 wherein said flip-flop comprises two NAND gates coupled output to input.

4. The flowmeter as claimed in claim I wherein said first and second measuring means comprises a flip flop formed of two NAND gates coupled input-to-output, one input to one NAND gate coupled to receive the first and second transmitted signals and one input of the other NAND gate coupled to receive said first and second received signals to produce set and reset signals to change the state of said flip flop.

5. The flowmeter as claimed in claim I wherein said first and second measuring means comprises a bi-stable flip-flop connected between said differentiating means and said difference signals , and

-12-

means for producing an output signal as a measure of phase in response to said differentiated signal.

6.    A flowmeter system for measuring the flow of a fluid along a path comprising, in combination:

a tubular body defining a path for confining fluid flow;

an adjustable oscillator for producing a signal at an adjustable frequency;

a switching circuit to alternately switch said signal into an upstream signal and a downstream signal;

a first transducer means and a second transducer means being disposed in spaced relation to each other along said tubular body, said first transducer means responsive to said upstream signal and said second transducer means responsive to said downstream signal, said first transducer means producing upstream acoustic compressions in the fluid responsive to said upstream signal and said second transducer means responsive to said upstream acoustic compressions by producing an upstream received signal, said second transducer means producing downstream acoustic compressions in the fluid responsive to said downstream signal and said first transducer means responds to said downstream acoustic compressions by producing a downstream received signal;

a phase detector responsive to each said upstream signal and to each said upstream received signal to produce an upstream phase difference which comprises the phase difference between said upstream transmitted signal and said upstream received signal, said phase detector also being responsive to each said downstream transmitted signal and to each said downstream received signal to produce a downstream phase difference which comprises the phase difference between said downstream transmitted signal and said downstream received signal;

said phase detector comprising a bistable flip-flop, differentiating means for integrating said upstream and downstream signals, differentiating means for

-13-

differentiating said upstream and downstream received signals and for using said differentiated signals to cause said bistable flip-flop to change state, with such change of state representing said phase difference ;

means to produce the sum of one said upstream phase difference and one said downstream phase difference; and

means responsive to the sum of one said upstream phase difference and one said downstream phase difference to adjust the frequency of said adjustaable oscillator to a frequency where a fixed wavelength distance occurs across the diameter of either said transducer when responding to a signal.

7. The flowmeter as claimed in claim 6 where said bistable flip-flop comprises two NAND gates connected output to input.

8. A phase lock loop system having a voltage controlled oscillator,

a phase detector for detecting the phase difference between the received signal and the transmitted signal,

means for generating an error voltage corresponding to any detected difference between the transmitted and received frequency and applying said error voltage to said voltage controlled oscillator so that the latter's output will correspond to the transmitted frequency,

said phase detector comprising an edge triggered reset/set bistable flip-flop.

9. The system as claimed in claim 8 wherein said phase detector also includes means for differentiating the received signal and differentiating the transmitted signal and applying said differentiated signals to said flip-flop.

FIG. 1

FIG. 2
*Prior Art*

+10V
0
+10V
0

FROM VCO 42

A o———
B o———
EX-OR

60

C ———→ TO INTEGRATOR 30

FROM RCVRS 22/24

| A | B | C |
|---|---|---|
| 1 | 0 | 1 |
| 0 | 1 | 1 |
| 0 | 0 | 0 |
| 1 | 1 | 0 |

FIG. 3

A ————  FROM VCO 42

-90° +90°
REF

62

B ————  FROM RCVR 22/24

FIG. 4
*Prior Art*

C ————  TO INTEGRATOR 30

2/3

FIG. 5

+10 V
86 90
R 80 76
+10 FROM VCO 42 88
0
70

+10 V
86 90
S 88 72 74
+10 FROM RCVRS 22/24 84 78
0
IE → TO INTEGRATOR 30

3/3

FROM VCO { 1
0
RESET PULSE

FROM RCVRS { 1
0
SET PULSE

+18°    REF    -18°

FIG. 6

OUTPUT